# EUROPÄISCHE PATENTSCHRIFT

(11) **EP 2 100 976 B1**
(45) Veröffentlichungstag und Bekanntmachung des Hinweises auf die Patenterteilung: **05.09.2012**
(21) Anmeldenummer: 09003515.5
(22) Anmeldetag: 11.03.2009
(51) Int. Cl.: C21D 1/42, H05B 6/36, F16J 15/08, C21D 9/02, B21D 53/20

(54) **Verfahren zum bereichsweisen Umformen einer aus einem Federstahlblech hergestellten Blechlage einer Flachdichtung.**
Method for forming areas of a sheet metal plate of a flat metal gasket made from spring steel sheet metal.
Procédé de formage local de zones d'une plaque de tôle d'un joint plat fabriquée à partir d'une tôle d'acier à ressort.

(30) Priorität: 15.03.2008 DE 102008014559
(43) Veröffentlichungstag der Anmeldung: 16.09.2009
(73) Patentinhaber: ElringKlinger AG, 72581 Dettingen (DE)
(72) Erfinder: Werz, Ulrich, 72581 Dettingen (DE)
(74) Vertreter: Hoeger, Stellrecht & Partner Patentanwälte

(56) Entgegenhaltungen:
- EP-A- 0 863 335
- DE-A1- 19 944 910
- JP-A- 11 097 165
- US-A1- 2007 194 010
- US-B1- 6 257 591

## Beschreibung

Metallische Flachdichtungen, insbesondere im Zusammenhang mit Verbrennungsmotoren verwendete solche Flachdichtungen, wie Zylinderkopfdichtungen, Auspuffkrümmerdichtungen und dergleichen, haben in der Regel mindestens eine aus einem Federstahlblech hergestellte Blechlage, die nicht nur als Fluid-Durchgangsöffnungen dienende Öffnungen und Löcher für den Durchtritt von Montageschrauben aufweist, sondern auch federelastische Abdichtsicken in Form von so genannten Vollsicken und/oder Halbsicken, diesen Sicken zugeordnete Verformungsbegrenzer (Stopper genannt) und gegebenenfalls zusätzlich zu solchen Stoppern weitere Abstützelemente, welche nicht einer Sicke zugeordnet sind und dem Zweck dienen, beim Einspannen der Flachdichtung zwischen Maschinenbauteil-Dichtflächen und im Betrieb auf die Flachdichtung einwirkende Pressungskräfte aufzunehmen, um Verzüge der Maschinenbauteile und insbesondere der Maschinenbauteil-Dichtflächen zumindest zu minimieren. In diesem Zusammenhang sei erwähnt, dass im Bereich eines Stoppers oder eines anderen Abstützelements die Gesamtdicke der Blechlage größer ist als in an das Abstützelement angrenzenden Bereichen der Blechlage, und dass die Höhe eines Stoppers (Überstand des Stoppers über an diesen angrenzende Bereiche der Blechlage) etwas kleiner sein muss als die Höhe der Abdichtsicke, damit diese im Motorbetrieb "arbeiten" kann, das heißt, dass sich die Höhe der Sicke reversibel verändern kann, ehe der Stopper gepresst wird und dann eine weitere Abflachung der Sicke verhindert, damit diese im Motorbetrieb durch die dynamische Druckbeanspruchung nicht zerstört werden kann.

Bei den in Rede stehenden Flachdichtungen haben die Stopper und anderen Abstützelemente üblicherweise die folgenden Formen, wenn darauf verzichtet werden soll, als Stopper bzw. Abstützelement ein als separates Blechstanzteil hergestelltes Element zu verwenden, welches auf der Blechlage zum Beispiel durch Punktschweißen befestigt wird: Ein Randbereich der Blechlage (sei es nun an einem äußeren oder einem im Inneren der Blechlage liegenden Rand) wird um ungefähr 180° umgebogen und auf die Blechlage zurückgefaltet, oder wird ein solcher Randbereich durch eine plastische Verformung des Blechs verdickt, zum Beispiel durch einen Prägevorgang oder durch Anstauchen des Blechs vom Rand der Blechlage her. Derartige Umformvorgänge lassen sich an einem Federstahlblech jedoch nur schwer oder gar nicht durchführen, ganz abgesehen davon, dass bei dem vorstehend erwähnten Umfalzen eines Randbereichs einer Federstahl-Blechlage in dieser an der Steile des kleinen Biegeradius zumindest Mikrorisse entstehen, die dann im Motorbetrieb zu einer Zerstörung der Flachdichtung führen.

In der EP-A-0 863 335 wird eine insbesondere einlagige metallische Flachdichtung, wie eine Zylinderkopfdichtung, beschrieben, bei der in einer aus einem Federstahlblech hergestellten Blechlage um eine abzudichtende Öffnung herum ein Abdichtelement ausgebildet ist, welches die Form einer Sicke oder eines umgebördelten (umgefalzten) Randbereichs der Blechlage hat. Um zu vermeiden, dass bei dem für die Herstellung des Abdichtelements erforderlichen Umformen der Blechlage in dieser Risse entstehen, wird die Blechlage in dem später das Abdichtelement bildenden Bereich zur Erzielung einer Gefügeänderung und einer damit einhergehenden Erweichung des Federstahlblechs wärmebehandelt, und nach erfolgter Herstellung des Abstützelements wird dieses thermisch nachbehandelt, um ihm die gewünschte Härte zu verleihen. Für die Wärmebehandlung zur Verminderung der Härte des Federstahlblechs werden in der EP-A-0 863 335 erwähnt eine induktive Erwärmung und eine Erwärmung mittels eines Lasers, Mikrowellen oder Elektronenstrahlen.

Eine Blechlage einer Flachdichtung stellt man nur dann aus einem verhältnismäßig teueren Federstahlblech her, wenn die Blechlage Elemente aufweist, welche funktionsnotwendig federelastische Eigenschaften haben. Wenn sich ein solches Element mit federelastischen Eigenschaften in der Nähe eines durch Umformen der Blechlage erzeugten Abstützelements befindet, führt eine durch eine Wärmebehandlung herbeigeführte Verminderung der Härte der Blechlage vor dem Umformen zu einer Beeinträchtigung der federelastischen Eigenschaften zum Beispiel einer in der Nachbarschaft des durch Umformen der Blechlage zu erzeugenden Abstützelements befindlichen Abdichtsicke. Dieses Problem tritt zwar dann nicht auf, wenn die Wärmebehandlung der Blechlage mittels eines Lasers oder Elektronenstrahlen durchgeführt wird, da sich Letztere ebenso wie ein Laserstrahl auf einen eng begrenzten Bereich fokussieren lassen; diese Wärmebehandlungsmethoden bedingen in der Produktion jedoch verhältnismäßig lange Taktzeiten, da beispielsweise für die Herstellung eines eine abzudichtende Fluid-Öffnung der Flachdichtung umschließenden Stoppers der Laserstrahl oder der Elektronenstrahl um die Fluid-Öffnung herum geführt werden muss. Außerdem besteht bei verhältnismäßig langen Taktzeiten die Gefahr, dass in Folge der Wärmeleitfähigkeit des Federstahlblechs auch die Härte und damit die federelastischen Eigenschaften von dem umzuformenden Bereich der Blechlage benachbarten Bereichen beeinträchtigt wird, ehe der Blechlage durch ein Umformwerkzeug Wärme entzogen wird.

Auch aus der US 6,257,591 B1 ergibt sich ein Verfahren für die Herstellung einer einlagigen Zylinderkopfdichtung aus einem Federstahlblech, bei der um eine Brennraumöffnung der Dichtung herum mittels einer in das Federstahlblech eingeprägten Sicke abgedichtet wird, zwischen welcher und der Brennraumöffnung die Blechlage einen die Brennraumöffnung umschließenden verdickten Bereich aufweist, der ein Abstützelement bildet, nämlich einen für die Sicke als Verformungsbegrenzer wirkenden sogenannten Stopper, für dessen Herstellung ein Randbereich der Blechlage umgefalzt, d.h. um 180° umgebogen und auf die eigentliche Blechlage aufgelegt wird. Damit sich aufgrund von im Motorbetrieb auftretenden Wechselbeanspruchungen (Druck- und Scherbeanspruchungen) des zum Zweck der Bildung des Stoppers umgeformten Bereichs der Blechlage in diesem Bereich keine Risse bilden, wird die Härte des Federstahlblechs in diesem Bereich durch lokales induktives Erhitzen reduziert. Um dabei ein Erhitzen von dem umzuformenden Blechbereich benachbarten Blechbereichen zu verhindern, werden Letztere beidseitig durch Isoliermaterial abgedeckt (Sp. 11, Zeilen 51 bis 56). Alternativ wird der zur Bildung des Stoppers umzufalzende Randbereich zunächst nur um ca. 90° umgebogen, so dass er einen hochgestellten Kragen bildet, auf den dann eine diesen Kragen umschließende Induktionsspule so aufgeschoben wird, dass sie der Kragenwurzel benachbart ist, um die im Blech induzierte Hitze auf den Bereich der Kragenwurzel und damit auf den dann weiter umzuformenden Blechbereich zu konzentrieren. In der US 6,257,591 B1 ist bezüglich der Einwirkzeit des elektromagnetischen Wechselfeldes von einer "short time period" die Rede; was hierunter konkret zu verstehen sein soll, wird aber ebenso wenig angegeben wie ein konkreter Zeitbereich oder eine konkrete Angabe einer maximalen Einwirkzeit. Außerdem wird in diesem Dokument noch nicht einmal andeutungsweise offenbart, weshalb die Einwirkzeit kurz sein soll, d.h. welcher Effekt durch diese kurze Einwirkzeit erzielt werden soll, so dass es unmöglich ist, abzuschätzen, was bei diesem bekannten Verfahren unter einer kurzen Einwirkzeit zu verstehen ist.

Vor allem bei einem lokalen Erhitzen einer Blechlage kann sich im Zuge des Erwärmens in Folge der thermischen Ausdehnung des Stahls der Abstand der Blechlage vom Induktor ändern - bei einer Abstandsänderung verändert sich die Erzeugung der für die Erhitzung verantwortlichen Wirbelströme, und die Folge einer solchen Änderung wäre, dass sich im Blech Beulen und/oder Falten bilden.

Ausgehend von einem Verfahren mit den Merkmalen des Oberbegriffs des Anspruchs 1, wie es sich aus der US 6,257,591 B1 ergibt, lag der Erfindung die Aufgabe zugrunde, einen zur Herstellung eines Abstützelements umzuformenden Bereich der Blechlage auf einfache und deshalb kostengünstige Weise zwecks Verminderung seiner Härte hinreichend so zu erwärmen, dass der für die Erwärmung erforderliche Energieeintrag auf einen eng begrenzten Bereich der Blechlage konzentriert wird, diesem Bereich benachbarte Blechbereiche nicht auch erweicht werden und im Zuge des Erwärmens das Entstehen von Verwerfungen des Blechs zumindest weitgehend vermieden wird.

Erfindungsgemäß wird diese Aufgabe mit den Merkmalen des Kennzeichens des Anspruchs 1 gelöst.

Mittels eines Induktors (ein von einem elektrischen Wechselstrom durchflossener elektrischer Leiter) lässt sich Wärmeenergie mit einer Leistung von einigen zehntausend W/cm² in ein Federstahlblech einbringen; da jedoch ohne zusätzliche Maßnahmen das durch den Induktor erzeugte elektromagnetische Wechselfeld den Induktor (im Querschnitt) kreisringförmig umgibt, bedarf es für eine enge Begrenzung des induktiv zu erhitzenden Bereichs der Blechlage eines Magnetfeld-Konzentrators, bei dem es sich um einen den Induktor umschließenden Mantel aus einem Material verhältnismäßig hoher Permeabilität handelt, welcher an der Stelle, an der das elektromagnetische Wechselfeld aus der aus Induktor und Magnetfeld-Konzentrator bestehenden Einheit austreten und auf den zu erweichenden Bereich der Blechlage einwirken soll, eine Öffnung aufweist, bei der es sich auch um eine fensterartige Öffnung handeln kann, die durch ein Material verhältnismäßig geringer Permeabilität verschlossen ist. Derartige, aus Induktor und Magnetfeld-Konzentrator bestehende Einheiten sind aus dem Stand der Technik bekannt, zum Beispiel aus der "Werkstoffbroschüre Ferrotron ® und Fluxtrol ® "der Firma POLYTRON Kunststofftechnik GmbH & Co. KG, D-51469 Bergisch-Gladbach.

Ein solcher Magnetfeld-Konzentrator besteht vorzugsweise aus einem Werkstoff, der sowohl ferromagnetische als auch dielektrische Eigenschaften aufweist und im Wesentlichen aus Weicheisenpartikeln besteht, die gleichmäßig verteilt in einen thermoplastischen Hochleistungskunststoff eingebettet sind.

Ein Magnetfeld-Konzentrator als solcher ergibt sich auch aus der US 2007/0194010 A1, welche eine Vorrichtung zum bereichsweisen induktiven Erhitzen eines Blechs offenbart, die zu beiden Seiten des Blechs Induktionsspulen sowie Magnetfeld-Konzentratoren aufweist und dem Zweck dient, im Blech ein gewünschtes Temperaturprofil zu erzeugen.

Das erfindungsgemäße Verfahren wird vorzugsweise für Federstähle mit einer Streckgrenze (Rₑ) von mindestens 1000 N/mm² als Ausgangsmaterial verwendet, da sich Bereiche solcher Federstahlbleche sonst nur höchst problematisch zu sogenannten Stoppern oder anderen Abstützelementen einer Flachdichtungsblechlage umformen lassen.

Für die Durchführung des erfindungsgemäßen Verfahrens eignet sich besonders ein Federstahlblech aus einem austenitischen Federstahl, da beispielsweise ein martensitischer Kohlenstoffstahl nach dem Erwärmen rasch abgekühlt werden muss.

Da sich, wie bereits erwähnt, mittels einer induktiven Erwärmung Wärmeenergie mit einer Leistung von einigen zehntausend W/cm² in ein Federstahlblech einbringen lässt, erlaubt das erfindungsgemäße Verfahren eine Erwärmung des umzuformenden Bereichs der Blechlage auf 700° C oder mehr innerhalb kürzester Zeit, und vorzugsweise wird bei dem erfindungsgemäßen Verfahren der umzuformende Bereich auf eine Temperatur von ungefähr 700° C bis ungefähr 900° C erwärmt. In diesem Zusammenhang sei erwähnt, dass bei einem Federstahlblech ein Bereich, der dem zu erwärmenden und umzuformenden Bereich verhältnismäßig nahe liegt und seine federelastischen Eigenschaften nicht verlieren soll, weil sich in ihm zum Beispiel eine Abdichtsicke oder ein mit einer anderen Verformung versehener Blechlagenbereich mit federelastischen Eigenschaften befindet, bis ca. 500° C warm werden darf, ohne dass eine Verminderung der Festigkeit und damit der federelastischen Eigenschaften des Stahls eintritt.

Wenn bei der Durchführung des erfindungsgemäßen Verfahrens der umzuformende Bereich der Federstahl-Blechlage nicht über eine Temperatur von ungefähr 900° C erwärmt wird, tritt in dem Stahl noch keine Rekristallisation ein - würde eine Rekristallisation eintreten, würden sich im Zuge des Erhitzens der Blechlage in dieser irreversibel Wellen bilden, was bei einer Blechlage einer Flachdichtung zu vermeiden ist.

Die Erfindung betrifft also insbesondere ein Verfahren zur Herstellung einer Blechlage, welche in unmittelbarer Nachbarschaft des Abstützelements einen mit einer Verformung versehenen Blechlagenbereich aufweist, der auch ohne eine thermische Nachbehandlung federelastische Eigenschaften besitzt, wobei sich das Verfahren dadurch auszeichnet, dass die induktive Erwärmung des mit dem Abstützelement zu versehenden Bereichs der Blechlage nach Einwirkzeit, Konzentration und Energie des elektromagnetischen Wechselfeldes derart gewählt wird, dass der Stahl in dem mit der Verformung zu versehenden bzw. versehenen Bereich der Blechlage zumindest keine nennenswerte Gefügeänderung und damit Festigkeitsänderung erfährt. Insbesondere betrifft die Erfindung ein solches Verfahren, bei dem die Verformung eine federelastische Abdichtsicke ist, für welche das Abstützelement einen Verformungsbegrenzer (Stopper) bildet.

Wegen der hohen Leistung einer aus Induktor und Magnetfeld-Konzentrator bestehenden Einheit genügt für die meisten Federstahl-Blechlagen von Flachdichtungen wegen deren geringer Blechdicke eine Einwirkzeit des elektromagnetischen Wechselfeldes von einigen Millisekunden bis höchstens ungefähr 1 sec., auf jeden Teil des umzuformenden Bereichs der Blechlage.

Da in dem umzuformenden Bereich der Blechlage deren Härte über die ganze Dicke der Blechlage ausreichend vermindert werden sollte und die Eindringtiefe eines elektromagnetischen Wechselfeldes (in die Blechlage) von der Frequenz des elektromagnetischen Wechselfeldes abhängt, sollte diese Frequenz nicht allzu hoch sein, sie darf aber auch nicht zu nieder sein, damit das elektromagnetische Wechselfeld in der Blechlage hinreichend starke, für die Erhitzung des Blechs verantwortliche Wirbelströme erzeugt. Deshalb wird für das erfindungsgemäße Verfahren empfohlen, ein elektromagnetisches Wechselfeld mit einer Frequenz von einigen hundert kHz bis ungefähr 1 MHz zu verwenden, insbesondere eine Frequenz in der Größenordnung von 200 bis 500 kHz.

Bei einer sehr langsamen Abkühlung des umzuformenden Bereichs der Blechlage nach dessen Erwärmung kann eine die Umformbarkeit des Blechs beeinträchtigende Versprödung des Stahls eintreten; wenn jedoch das erfindungsgemäße Verfahren so durchgeführt wird, dass der erhitzte Bereich der Blechlage in einem Zeitraum von ungefähr 1 sec. bis ungefähr 1 min. hinreichend abgekühlt wird, unterbleibt eine solche Versprödung, und bei der Durchführung des erfindungsgemäßen Verfahrens lassen sich hinreichend kurze Abkühlzeiten ohne Weiteres erreichen, nämlich durch Kühlung durch die Umgebungsluft und Wärmeleitung, vor allem dann, wenn unmittelbar nach der Erhitzung des umzuformenden Blechbereichs auf diesen ein Umformwerkzeug einwirkt.

Wie vorstehend bereits angedeutet wurde, kann der umzuformende Bereich der Blechlage auch schon im Zuge des Erhitzens umgeformt werden, insbesondere auf die Weise, dass die den mindestens einen Induktor samt der dem Letzteren zugeordneten Magnetfeld-Konzentrationsvorrichtung auch als Umformwerkzeug gestaltet oder mit einem solchen zu einer baulichen Einheit zusammengefasst wird.

Wie sich aus dem Vorstehenden ergibt, kann eine nicht erfindungsgemäße Einrichtung zur Durchführung des erfindungsgemäßen Verfahrens angewandt werden, welche mindestens einen an eine Wechselstromquelle anschließbaren elektrischen Leiter als Induktor zur induktiven Erwärmung des umzuformenden Bereichs der Blechlage aufweist und gekennzeichnet ist durch eine den Induktor teilweise umschließende Magnetfeld-Konzentrationsvorrichtung bzw. Magnetfeld-Abschirmvorrichtung, die zusammen mit dem Induktor eine Induktionseinheit bildet und eine dem umzuformenden Bereich der Blechlage zuzukehrende Öffnung aufweist, in deren Bereich die Magnetfeld-Konzentrationsvorrichtung für das elektromagnetische Wechselfeld durchlässig ist.

Damit derjenige Bereich der Blechlage, aus dem dann durch Umformen ein Abstützelement gebildet wird, "schlagartig" gleichzeitig als Ganzes erhitzt werden kann, ist bei einer bevorzugten Ausführungsform der nicht erfindungsgemäßen Einrichtung die Form der Induktionseinheit an die Form des umzuformenden Bereichs der Blechlage angepasst - soll also beispielsweise ein ringförmiger Stopper erzeugt werden, hat die Induktionseinheit die Gestalt eines Rings.

Grundsätzlich kann die nicht erfindungsgemäße Einrichtung aber auch so gestaltet werden, dass die Induktionseinheit und die Blechlage während des Erhitzens der Letzteren so relativ zueinander bewegbar sind, dass sich mit der Induktionseinheit der umzuformende Bereich der Blechlage überfahren lässt, so dass mit einer solchen Induktionseinheit einander benachbarte Abschnitte des umzuformenden Bereichs der Blechlage nacheinander erhitzt werden.

Gerade für diesen Fall empfiehlt sich eine Ausführungsform der nicht erfindungsgemäßen Einrichtung, bei welcher die Induktionseinheit auch als Umformwerkzeug gestaltet ist oder mit einem Umformwerkzeug kombiniert und zu einer Baueinheit zusammengefasst ist, so dass sich der Umformvorgang im Zuge des Erhitzens des umzuformenden Bereichs der Blechlage oder unmittelbar nach dem Erhitzen durchführen lässt; besonders günstig ist es dann, wenn die Blechlage zum Erhitzen und Umformen stationär gehalten und die erwähnte Baueinheit über den umzuformenden Bereich oder die umzuformenden Bereiche der Blechlage bewegt wird, um so das Erhitzen und das Umformen in einem Schritt kontinuierlich durchführen zu können.

Besonders vorteilhaft sind Ausführungsformen der nicht erfindungsgemäßen Einrichtung mit mehreren, insbesondere zwei, Induktionseinheiten, die mit den Öffnungen ihrer Magnetfeld-Konzentrationsvorrichtungen einander so gegenüberliegen, dass zwischen diesen Öffnungen die zu behandelnde Blechlage anordenbar ist, weil dann das elektromagnetische Wechselfeld noch besser auf den zu erhitzenden Bereich der Blechlage konzentriert wird.

Wenn mit einer nicht erfindungsgemäßen Einrichtung zumindest der zu erhitzende und sodann umzuformende Bereich der Blechlage eingespannt werden soll, weist die Einrichtung mindestens einen Niederhalter für die Blechlage auf.

Um zu verhindern, dass im Zuge des Erhitzens der Blechlage sich der Abstand der Blechlage von der Induktionseinheit ändert, kann die Einrichtung eine Abstandshalterplatte geringer Permeabilität zwischen der Induktionseinheit und der Blechlage aufweisen.

Weitere Merkmale, Vorteile und Einzelheiten der Erfindung ergeben sich aus der nachfolgenden Beschreibung sowie der beigefügten zeichnerischen Darstellung einiger bevorzugter Ausführungsformen der Erfindung; in der Zeichnung zeigen:
- Figur 1: einen Schnitt durch einen Teil einer mit Hilfe erfindungsgemässen Verfahrens hergestellten Blechlage einer Flachdichtung, wobei der gezeichnete Blechlagenteil an eine abzudichtende Öffnung der Flachdichtung angrenzen soll und eine diese Öffnung umschließende Abdichtsicke sowie ein dieser zugeordnetes, als Verformungsbegrenzer (Stopper) wirkendes Abstützelement aufweist;
- Figur 2: einen der Figur 1 entsprechenden Schnitt durch eine andere Ausführungsform mit einem gegenüber der Ausführungsform gemäß Figur 1 modifizierten Stopper für die Abdichtsicke;
- Figur 3: einen Schnitt durch eine erste Ausführungsform einer nicht erfindungsgemäßen Einrichtung samt einer durch diese zu behandelnden Blechlage;
- Figur 4: einen der Figur 3 entsprechenden Schnitt durch eine zweite Ausführungsform der nicht erfindungsgemäßen Einrichtung;
- Figur 5: eine der Figur 3 entsprechenden Schnitt durch eine dritte Ausführungsform der nicht erfindungsgemäßen Einrichtung;
- Figur 6: einen der Figur 3 entsprechenden Schnitt durch eine vierte Ausführungsform der nicht erfindungsgemäßen Einrichtung und eine durch diese zu behandelnde Blechlage, welche aus einem im Folgenden noch zu beschreibenden Grund vorverformt wurde;
- Figuren 7A bis 7D: Schnittdarstellungen aufeinander folgender Schritte einer Ausführungsform des erfindungsgemäßen Verfahrens sowie der hierfür eingesetzten Einheiten einer nicht erfindungsgemäßen Einrichtung;
- Figur 8: einen Schnitt durch einen Teil einer weiteren Ausführungsform der nicht erfindungsgemäßen Einrichtung;
- Figur 9: eine Draufsicht auf einen Teil einer Blechlage vor der Durchführung des erfindungsgemäßen Verfahrens;
- Figur 10: einen Schnitt nach der Linie 10-10 in Figur 9 nach Durchführung des erfindungsgemäßen Verfahrens;
- Figur 11: einen Schnitt durch eine weitere Ausführungsform der nicht erfindungsgemäßen Einrichtung;
- Figur 12: einen Schnitt durch eine weitere Ausführungsform der nicht erfindungsgemäßen Einrichtung;
- Figur 13: einen Schnitt durch einen Teil einer mit Hilfe der Einrichtung gemäß Figur 12 und des erfindungsgemässen Verfahrens hergestellten Blechlage einer Flachdichtung;
- Figur 14: einen Schnitt durch einen Teil einer weiteren Ausführungsform der nicht erfindungsgemäßen Einrichtung mit einem Teil der mit dieser Einrichtung zu behandelnden Blechlage, und
- Figur 15: eine isometrische Darstellung einer weiteren, ein Umformwerkzeug beinhaltenden Ausführungsform der nicht erfindungsgemäßen Einrichtung mit einem Teil der mit Hilfe dieser Einrichtung zu erhitzenden und umzuformenden Blechlage.

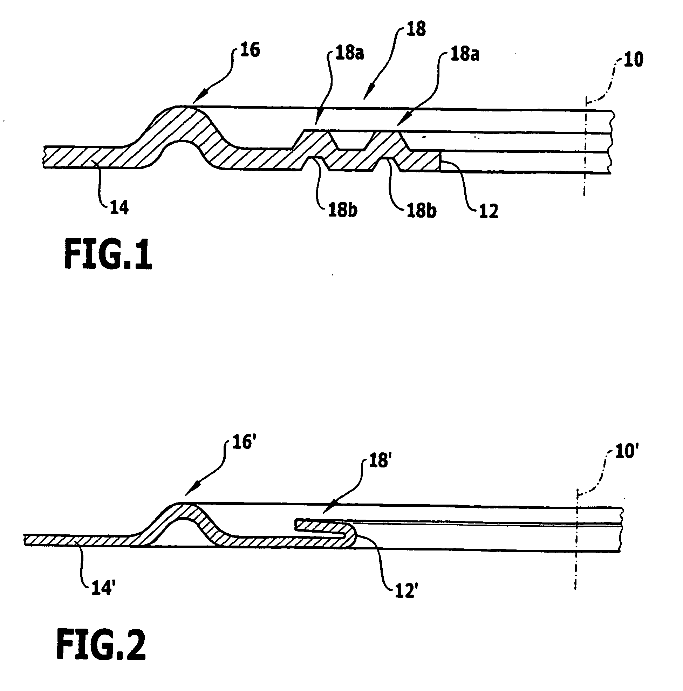

Der in Figur 1 dargestellte Teil einer Blechlage einer Flachdichtung ist typisch für eine ein- oder mehrlagige metallische Zylinderkopfdichtung, und die Figur 1 zeigt eine Achse 10 einer Brennraumöffnung 12, welche aus einer Blechlage 14 der Zylinderkopfdichtung ausgestanzt wurde. Die Blechlage 14 hat eine die Brennraumöffnung 12 kreisringförmig umschließende und als so genannte Vollsicke gestaltete Abdichtsicke 16, welche, da die Blechlage 14 aus Federstahlblech hergestellt wurde, federelastische Eigenschaften hat und sich reversibel abflachen, das heißt in ihrer Höhe vermindern lässt, wenn die Zylinderkopfdichtung zwischen einem Zylinderkopf und einem Motorblock eingespannt wird, wobei sich die Abdichtsicke 16 dank ihrer federelastischen Eigenschaften in ihrer Höhe der im Motorbetrieb periodisch schwankenden Breite bzw. Weite des so genannten Dichtspalts anpassen kann, der durch die Zylinderkopfdichtung abgedichtet werden soll und von nicht dargestellten Dichtflächen des Zylinderkopfs und des Motorblocks definiert wird. Um übermäßige Abflachungen der Abdichtsicke 16 zu vermeiden, welche insbesondere im Motorbetrieb aufgrund der dynamischen Belastungen der Abdichtsicke 16 zu deren Zerstörung aufgrund von Rissbildungen führen würden, ist der Abdichtsicke 16 ein als Ganzes mit 18 bezeichneter Stopper zugeordnet, welcher die Brennraumöffnung 12 gleichfalls kreisringförmig umschließt und durch Umformen, und zwar durch Prägen, der Blechlage 14 erzeugt wurde. Die in Figur 1 dargestellte Ausführungsform des Stoppers 18 hat Erhebungen 18a und entsprechende Vertiefungen 18b, welche die Brennraumöffnung 12 kreisringförmig umschließen können, aber auch so gestaltet sein können, dass in einer Draufsicht auf die Blechlage 14 die Erhebungen 18a ein zum Beispiel schachbrettähnliches Muster von diskreten, noppenartigen Erhebungen 18a und die Vertiefungen 18b in einer Unteransicht der Blechlage 14 ein entsprechendes Muster von diskreten Vertiefungen 18b bilden. Damit sich der Stopper 18 durch Prägen herstellen lässt, wurde die Blechlage 14 vor dem Umformen in einem kreisringförmigen, die Brennraumöffnung 12 umschließenden Bereich der Blechlage 14, in dem nach dem Umformen der Stopper 18 ausgebildet ist, erfindungsgemäß wärmebehandelt, und zwar so, dass durch die lokale, kurzzeitige Erhitzung der Blechlage 14 die federelastischen Eigenschaften der Abdichtsicke 16 nicht beeinträchtigt wurden.

Die in Figur 2 dargestellte Ausführungsform einer Blechlage 14' hat gleichfalls eine Abdichtsicke 16' und einen Stopper 18', welche beide eine Brennraumöffnung 12' kreisringförmig und konzentrisch zur Achse 10' der Brennraumöffnung umschließen. Bei dieser Ausführungsform wurde der Stopper 18' jedoch dadurch erzeugt, dass ein um die Achse 10' der Brennraumöffnung herum verlaufender und zunächst ebener Randbereich der Blechlage 14' umgebördelt wurde, das heißt in diesem Randbereich wurde die Blechlage 14' auf sich selbst umgefaltet, nachdem ein kreisringförmiger Bereich der Blechlage 14', in welchem sich nach Herstellung des Stoppers 18' der Biegeradius der Blechlage bzw. des Stoppers 18' befindet, erfindungsgemäß wärmebehandelt wurde, um die Blechlage 14' rissfrei umfalzen zu können. Je nach radialer Breite des Stoppers 18' kann es auch erforderlich sein, die Blechlage 14' auch in demjenigen Bereich erfindungsgemäß wärmezubehandeln, welcher die gemäß Figur 2 obere Hälfte des Stoppers 18' bildet, weil sonst beim Umfalzen der Blechlage im radial äußeren Randbereich der oberen Hälfte des Stoppers 18' Risse entstehen können, welche ungefähr radial zur Achse 10' der Brennraumöffnung 12' orientiert sind.

Wie dies für einen Stopper selbstverständlich ist, weisen die Stopper 18 und 18' bei unbelasteter, das heißt noch nicht eingebauter Flachdichtung eine etwas geringere Höhe auf als die Abdichtsicke 16 bzw. 16', damit sich diese beim Einbau der Flachdichtung und im Betrieb federelastisch etwas abflachen lässt, ehe der zugeordnete Stopper 18 bzw. 18' zum Tragen kommt, das heißt die auf die Blechlage 14 bzw. 14' um die Brennraumöffnung 12 bzw. 12' herum einwirkenden Pressungskräfte aufnimmt und eine weitere Abflachung der Abdichtsicke verhindert. Damit ein Stopper als Verformungsbegrenzer wirken kann, muss er so hart sein, dass er sich unter der Einwirkung der beim Einbau der Flachdichtung und im Betrieb auftretenden Pressungskräfte zumindest nicht nennenswert verformt (weder elastisch, noch plastisch), das heißt seine ursprüngliche Höhe zumindest im Wesentlichen beibehält.

Vor allem bei einer Zylinderkopfdichtung kann es erforderlich sein, Abstützelemente, welche gleich oder ähnlich wie der Stopper 18 oder der Stopper 18' gestaltet sind, auch an anderen Stellen als um eine Brennraumöffnung oder eine andere Fluid-Öffnung herum vorzusehen, zum Beispiel an der Peripherie der Dichtungsplatte einer Zylinderkopfdichtung, und zwar insbesondere an den Schmalseiten einer für einen Mehrzylindermotor vorgesehenen Zylinderkopfdichtung, nämlich zu dem Zweck, Verzüge in den Motorbauteilen Zylinderkopf und Motorblock, insbesondere des Zylinderkopfs, zu minimieren - derartige Bauteilverzüge werden bei einem Mehrzylindermotor dadurch verursacht, dass aufgrund der Verteilung der Zylinderkopfschrauben über die Motorbauteile die von den Zylinderkopfschrauben erzeugten und auf die Zylinderkopfdichtung einwirkenden Pressungskräfte in den Bereichen der beiden Längsenden einer Zylinderkopfdichtung für einen Mehrzylindermotor höher sind als in anderen Bereichen; lokal unterschiedliche Bauteilsteifigkeiten des Motorblocks und des Zylinderkopfs können aber gleichfalls zu solchen örtlich unterschiedlichen Pressungskräften führen, so dass durch solche Unterschiede in den Pressungskräften sonst hervorgerufene Bauteilverzüge durch an der Zylinderkopfdichtung vorgesehene Abstützelemente minimiert werden sollten.

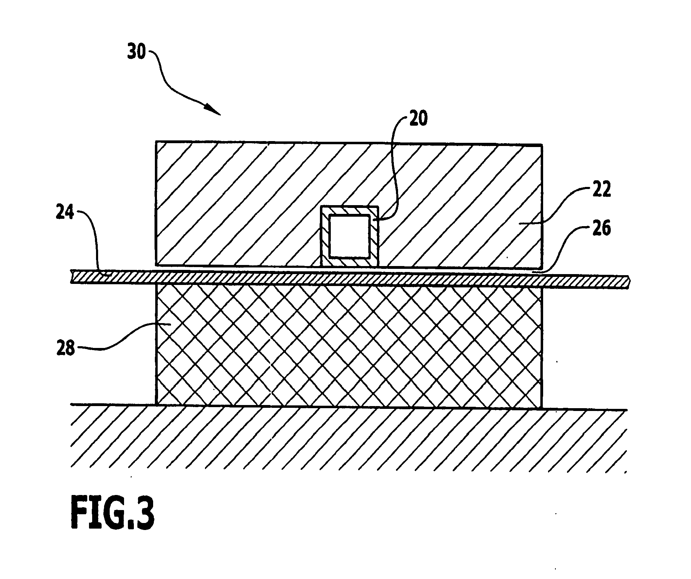

Die in Figur 3 im Schnitt gezeigte Ausführungsform einer nicht erfindungsgemäßen Einrichtung hat einen nur schematisch dargestellten Induktor 20, der, soll ein ringförmiges Abstützelement durch Umformen einer Federstahl-Blechlage erzeugt werden, der Gestalt des umzuformenden Blechlagenbereichs angepasst und in einer Ansicht gemäß Figur 3 von oben gleichfalls eine ringförmige Gestalt hat. Bei dem Induktor 20 kann es sich zum Beispiel um einen ringförmigen metallischen (elektrischen) Leiter, aber auch um eine ringförmige Spule zur Erzeugung eines elektromagnetischen Wechselfeldes handeln. Der Induktor 20 ist in einen Magnetfeld-Konzentrator 22 eingesetzt, der aus einem Werkstoff hoher Permeabilität besteht, insbesondere aus einem Werkstoff mit ferromagnetischen Eigenschaften. Der Konzentrator 22 umschließt den Induktor 20 oben und auf beiden Seiten, jedoch nicht unten (gemäß Figur 3), damit das durch den Induktor 20 erzeugte elektromagnetische Wechselfeld auf eine Blechlage 24 einwirken und in dieser der lokalen Erhitzung der Blechlage dienende Wirbelströme erzeugen kann. Bei der in Figur 3 dargestellten Ausführungsform wird in Folge des Konzentrators 22 das auf die Blechlage 24 einwirkende elektromagnetische Wechselfeld auf denjenigen Bereich der Blechlage 24 konzentriert und beschränkt, welcher unter (gemäß Figur 3) dem Induktor 20 liegt. Bei der in Figur 3 dargestellten Ausführungsform ist zwischen dem Induktor 20 und der Blechlage 24 ein Luftspalt 26 vorgesehen, damit die Blechlage nicht in Kontakt mit dem Induktor 20 kommt. Bei dieser Ausführungsform der nicht erfindungsgemäßen Einrichtung ist schließlich eine tischartige Auflage 28 für die Blechlage 24 vorgesehen, bei der es sich vorteilhafterweise um eine Einheit aus einem Werkstoff, wie Keramik, handelt, welcher das von der aus Induktor 20 und Konzentrator 22 gebildeten Induktionseinheit erzeugte elektromagnetische Wechselfeld nicht beeinflusst und außerdem eine möglichst geringe Wärmeleitfähigkeit aufweist, damit der durch die Induktionseinheit 30 zu erhitzende Bereich der Blechlage 24 durch die Auflage 28 nicht gekühlt wird.

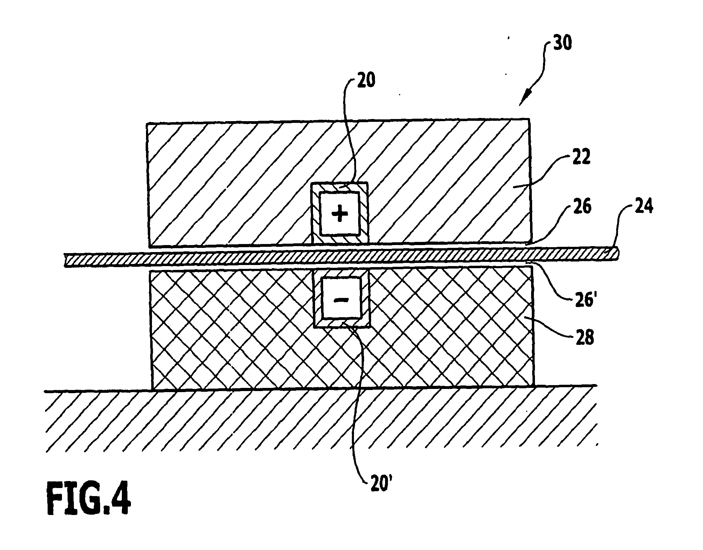

Die in Figur 4 dargestellte Ausführungsform der nicht erfindungsgemäßen Einrichtung unterscheidet sich von derjenigen gemäß Figur 3 nur dadurch, dass sie einen zweiten Induktor aufweist, weshalb in Figur 4 dieselben Bezugszeichen wie in Figur 3 verwendet wurden, sieht man von dem Bezugszeichen für den zweiten Induktor ab. Dieser zweite Induktor 20' liegt dem anderen Induktor 20 gegenüber und ist in die als Keramikplatte ausgeführte Auflage 28 eingebettet. Entsprechend dem Luftspalt 26 der Ausführungsform gemäß Figur 3 ist bei der Ausführungsform gemäß Figur 4 ein Luftspalt 26' auch zwischen dem zweiten Induktor 20' und der Blechlage 24 vorgesehen, damit letztere mit dem zweiten Induktor 20' nicht in Kontakt kommt - selbstverständlich muss deshalb die Blechlage 24 durch nicht dargestellte Mittel so gehalten werden, dass sich der Luftspalt 26' ergibt. In Figur 4 wurde durch ein mathematisches Plus-Zeichen im Induktor 20 und durch ein mathematisches Minus-Zeichen im Induktor 20' angedeutet, dass bei einem Beispiel in jedem Moment die Stromrichtung des im jeweiligen Induktor fließenden elektrischen Wechselstromes entgegengesetzt zur Stromrichtung im jeweils anderen Induktor ist; in diesem Fall ist es nicht erforderlich, für den zweiten Induktor 20' einen zweiten Konzentrator vorzusehen, um das von den beiden Induktoren 20, 20' erzeugte elektromagnetische Wechselfeld auf denjenigen Bereich der Blechlage 24 zu konzentrieren, welcher unmittelbar unter dem Induktor 20 liegt, wenn jedoch auch der zweite Induktor 20' von einem zweiten Konzentrator bis auf seine der Blechlage 24 zugewandte Seite umschlossen wird, erfolgt eine noch bessere Konzentration des elektromagnetischen Wechselfelds auf den jeweils zu erhitzenden Bereich der Blechlage 24. Bevorzugt wird jedoch eine bevorzugte Ausführungsform des erfindungsgemäßen Verfahrens, welche vorsieht, dass bei zwei einander gegenüberliegenden Induktoren, zwischen denen die zu behandelnde Blechlage angeordnet ist, in den der Blechlage benachbarten Induktorbereichen in jedem Moment die Stromrichtung des in jeweils einem Induktor fließenden elektrischen Wechselstromes gleich der Stromrichtung im jeweils anderen Induktor ist; dadurch scheint sich eine bessere und gleichmäßigere Erwärmung der Blechlage zu ergeben.

Die Figur 4 lässt auch erkennen, dass es zur Einhaltung eines Abstands zwischen der Blechlage 24 und einem Induktor sinnvoll sein kann, die nicht erfindungsgemäße Einrichtung mit einem Abstandshalter zwischen dem Induktor und der Blechlage 24 zu versehen, wobei dieser Abstandshalter natürlich aus einem Material bestehen muss, welches einerseits elektrisch nicht-leitend und andererseits für das elektromagnetische Wechselfeld durchlässig ist, das heißt eine geringe Permeabilität aufweist.

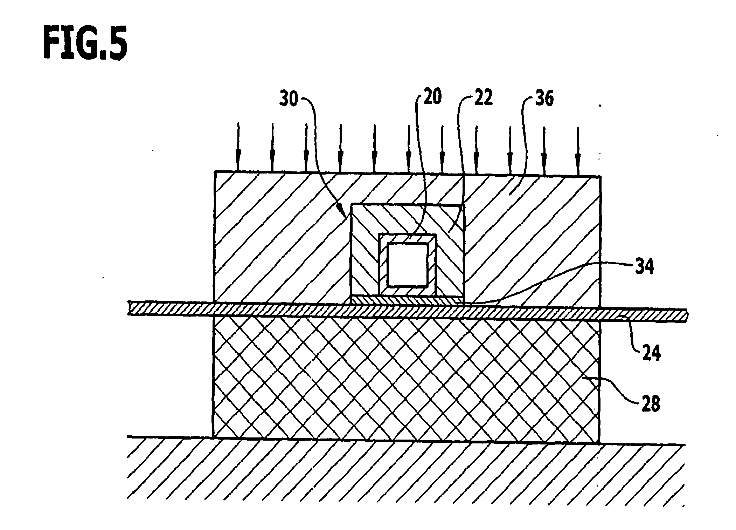

Die in Figur 5 dargestellte weitere Ausführungsform der nicht erfindungsgemäßen Einrichtung ist weitgehend mit der in Figur 3 dargestellten Ausführungsform identisch, weshalb in Figur 5, soweit möglich, dieselben Bezugszeichen wie in Figur 3 verwendet wurden und im Folgenden nur diejenigen Merkmale der in Figur 5 dargestellten Ausführungsform beschrieben werden, durch die sich die beiden Ausführungsformen unterscheiden.

Die Ausführungsform gemäß Figur 5 weist zwischen dem Induktor 20 und dem kleiner als bei der Ausführungsform gemäß Figur 3 gestalteten Konzentrator 22 eine als Abstandshalter dienende Zwischenplatte 34 aus einem elektrisch isolierenden, für das elektromagnetische Wechselfeld jedoch durchlässigen Material auf, durch die gewährleistet wird, dass die Blechlage 24 vor allem im Zuge ihres Erhitzens nicht mit dem Induktor 20 in Kontakt kommen kann. Der Induktor 20 und der Konzentrator 22 sind in einen zum Beispiel stempelartigen Niederhalter 36 eingesetzt, welcher, wie durch Pfeile angedeutet wurde, gemäß Figur 5 nach unten gegen die auf der Auflage 28 aufliegende Blechlage 24 gepresst werden kann (durch nicht dargestellte Mittel) und dessen als Niederhalterfläche dienende Unterseite mit der Unterseite der Zwischenplatte 34 bündig ist.

Analog zur Ausführungsform gemäß Figur 5 kann auch die Ausführungsform gemäß Figur 4 mit Zwischenplatten versehen werden, welche die Luftspalte 26 und 26' mindestens im Bereich der beiden Induktoren 20 und 20' ausfüllen und zwischen denen die Blechlage 24 angeordnet werden kann.

Mit der Einrichtung gemäß Figur 5 lässt sich aufgrund des Niederhalters 36 zumindest weitgehendst vermeiden, dass die Blechlage 24 beim Erhitzen durch die Induktionseinheit 30 Beulen oder Falten bildet - dies wird dadurch verhindert, dass die Blechlage 24 zumindest neben dem Induktor 20 nach unten gegen die Auflage 28 gepresst wird und zwischen dieser Auflage und der Zwischenplatte 34 eingespannt ist.

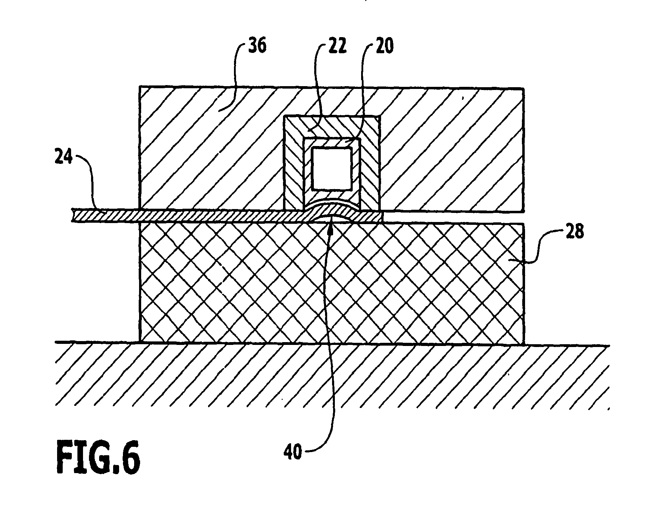

Da die Blechlage in dem durch induktive Erwärmung mit einer geringeren Härte versehenen Bereich umgeformt werden soll, kann es vorteilhaft sein, den zu erhitzenden Bereich schon vor dem induktiven Erwärmen mit einer Verformung zu versehen, welche zum einen bewirkt, dass im Zuge des induktiven Erwärmens stattfindende Wärmedehnungen der Blechlage zu einer Verformung der Blechlage in einer vorgegebenen Richtung führen, und zum anderen dazu dienen kann, den sich an das induktive Erwärmen anschließenden Umformprozess zu erleichtern. Dies soll anhand der Figur 6 näher erläutert werden.

Die Figur 6 zeigt eine Ausführungsform der nicht erfindungsgemäßen Einrichtung, welche gegenüber der Ausführungsform gemäß Figur 5 geringfügig modifiziert wurde, und zwar nur insofern, als die Zwischenplatte 34 der Ausführungsform gemäß Figur 5 weggelassen und der Induktor 20 in seiner Form, nämlich an seiner Unterseite, an die Geometrie einer Verformung der Blechlage 24 angepasst ist, welche schon vor dem induktiven Erwärmen der Blechlage in Letzterer ausgebildet wurde. Bei der in Figur 6 dargestellten Ausführungsform hat diese Verformung der Blechlage 24 die Gestalt einer Sicke 40, und die Unterseite des Induktors 20 ist entsprechend gestaltet. Bei der Einrichtung gemäß Figur 6 soll die Blechlage 24 außerhalb der Sicke 40 zwischen dem Niederhalter 36 und der Auflage 28 eingespannt sein, während der später umzuformende Bereich der Blechlage induktiv erwärmt wird. In Folge der Sicke 40 führen beim induktiven Erwärmen der Blechlage 24 auftretende Wärmedehnungen der Blechlage zu einer definierten Verformung der Blechlage unterhalb des Induktors 20, nämlich zu einer Vergrößerung der Höhe der Sicke 40. Der Abstand der Oberseite der Blechlage 24 von der Unterseite des Induktors 20 muss natürlich so gewählt werden, dass im Zuge des induktiven Erwärmens der Blechlage 24 kein Kontakt zwischen der Letzteren und dem Induktor 20 stattfindet.

Die Sicke 40 erleichtert nun auch ein gegebenenfalls durchzuführendes Umbördeln oder Umfalzen des gemäß Figur 6 rechten Endbereichs der Blechlage 24, wenn das Umbördeln so vorgenommen wird, dass der Biegeradius des umgebördelten Bereichs (siehe Figur 2) dort liegt, wo sich vor dem Umbördeln der Kamm bzw. die Kuppe der Sicke 40 befand.

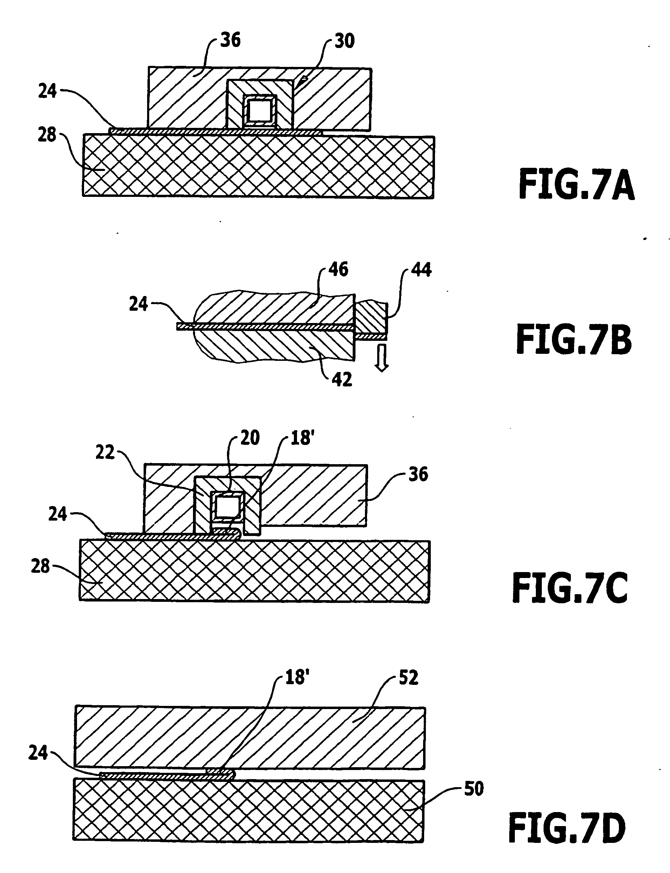

Anhand der Figuren 7A bis 7D soll nun eine bevorzugte Ausführungsform des erfindungsgemäßen Verfahrens näher erläutert werden.

Die Figur 7A zeigt eine Einrichtung ähnlich derjenigen gemäß Figur 3, wobei jedoch die Induktionseinheit 30 wie bei der Ausführungsform gemäß Figur 5 in einen Niederhalter 36 eingesetzt ist. An die Stelle des in Figur 7A gezeigten Luftspalts kann eine Zwischenplatte entsprechend der Zwischenplatte 34 der Ausführungsform gemäß Figur 5 treten.

Nachdem der später umzuformende Bereich der Blechlage 24 induktiv erwärmt wurde, was zu einer Veränderung der Geometrie eines benachbarten Randes der Blechlage führen kann, zum Beispiel der Geometrie einer von einem Stopper zu umgebenden Öffnung, wird ein dem induktiv erwärmten Bereich der Blechlage 24 benachbarter Bereich der Blechlage durch Stanzen mit einem Rand bzw. einer Kante vorgegebener Geometrie versehen, und zwar in einer Stanzeinrichtung, welche in Figur 7B schematisch dargestellt wurde. Diese Stanzeinrichtung hat eine teilweise dargestellte Matrize 42, eine teilweise dargestellte und als Stanzstempel 44 gestaltete Patrize sowie einen teilweise dargestellten Niederhalter 46 zum Einspannen der Blechlage 24 zwischen diesem und der Matrize 42.

Nach dem Stanzvorgang wird der gemäß Figur 7B rechte Randbereich der Blechlage 24 zum Beispiel durch Umbördeln mittels eines nicht dargestellten Werkzeugs umgeformt (siehe die Figur 2), so dass die Blechlage 24 die in Figur 7C gezeigte Gestalt erhält. Auf diese Wiese kann der in Figur 2 gezeigte Stopper 18' an der Blechlage 24 ausgebildet werden. Wenn nun der Stopper mit einem Profil versehen werden soll, zum Beispiel mit einer längs des Stoppers (senkrecht zur Zeichnungsebene der Figur 7C) variierenden Höhe bzw. Dicke, empfiehlt es sich, die Blechlage 24 im Bereich des Stoppers 18' noch einmal induktiv zu erwärmen, um die für die Erzeugung des Höhenprofils erforderliche Umformung (Prägevorgang) zu erleichtern. Hierzu dient die in Figur 7C schematisch gezeigte Einrichtung mit einer Auflage 28 für die Blechlage 24, einem Induktor 20, einem Konzentrator 22 und einem Niederhalter 36.

Die Figur 7D zeigt schließlich schematisch eine Presse oder Prägeeinrichtung mit zwei Stempeln 50 und 52, mit denen das gewünschte Profil in den Stopper 18' eingeprägt werden kann.

Es ist vorzugsweise auch möglich, daß eine nicht erfindungsgemäße Einrichtung nicht dazu dient, einen umzuformenden Bereich einer Federstahl-Blechlage induktiv zu erwärmen, um eine Federstahl-Blechlage mit einem Abstützelement, zum Beispiel einem Stopper, versehen zu können, sondern daß die nicht erfindungsgemäße Einrichtung so ausgebildet und verwendet wird, dass sich mit ihr ein zuvor hergestelltes Abstützelement in seiner Härte verändern (vermindern) lässt.

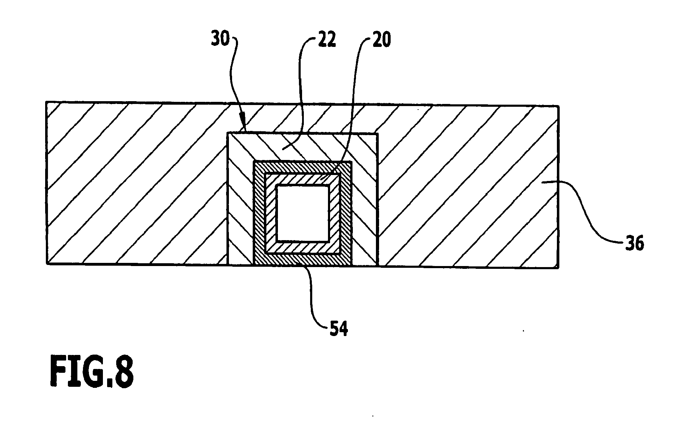

Da der Magnetfeld-Konzentrator einer nicht erfindungsgemäßen Einrichtung, wie oben erwähnt, gegebenenfalls elektrisch leitende Partikel enthält, kann es zweckmäßig sein, zwischen einem Konzentrator 22 und einem Induktor 20 eine elektrisch isolierende Schicht vorzusehen; ebenso kann es zweckmäßig sein, zwischen dem Induktor 20 und der induktiv zu erwärmenden Blechlage eine elektrisch isolierende Schicht vorzusehen, welche integraler Bestandteil der Induktionseinheit 30 ist. Eine solche Variante zeigt die Figur 8, gemäß welcher der Induktor 20 von einer elektrisch isolierenden Schicht 54 nach Art eines Mantels umschlossen wird.

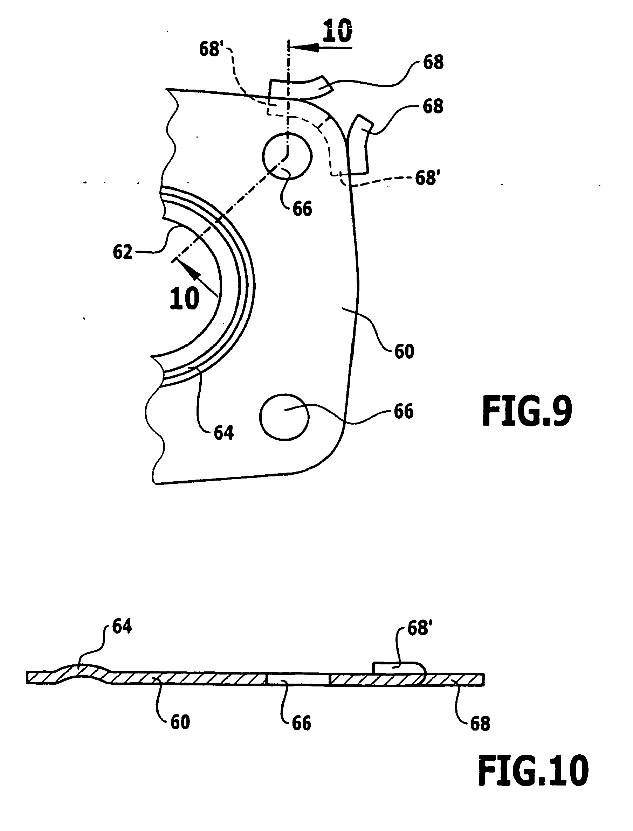

Anhand der Figuren 9 und 10 soll eine Federstahl-Blechlage einer Flachdichtung erläutert werden, die mit Hilfe des erfindungsgemäßen Verfahrens mit einem Abstützelement versehen wurde, das nicht einer Abdichtsicke zugeordnet ist, sondern Verzügen von Maschinenbauteilen entgegenwirken soll, zwischen denen die Flachdichtung zu montieren ist. Die Figur 9 zeigt einen Teil einer Blechlage 60 mit einer Fluid-Öffnung 62, um die herum die Blechlage 60 mit einer Abdichtsicke 64 versehen ist. Ferner weist die Blechlage 60 Schraubenlöcher 66 für den Durchtritt von Montageschrauben, zum Beispiel Zylinderkopfschrauben, auf. An der Peripherie der Blechlage 60 befinden sich Blechlappen 68, welche beim Ausstanzen der Blechlage 60 erzeugt wurden und so auf diese zurückgefaltet werden sollen, dass sie Abstützelemente 68' bilden, welche in Figur 9 gleichfalls dargestellt wurden. Die Figur 10 zeigt einen Schnitt nach der Linie 10-10 in Figur 9, und zwar sowohl mit den noch nicht umgefalteten Blechlappen 68, als auch mit den Abstützelementen 68'. Vor dem Umfalten der Blechlappen 68 werden also Bereiche der Blechlage 60 erfindungsgemäß induktiv erwärmt, in denen sich nach dem Umfalten der Blechlappen 68 die Biegeradien der Blechlage befinden.

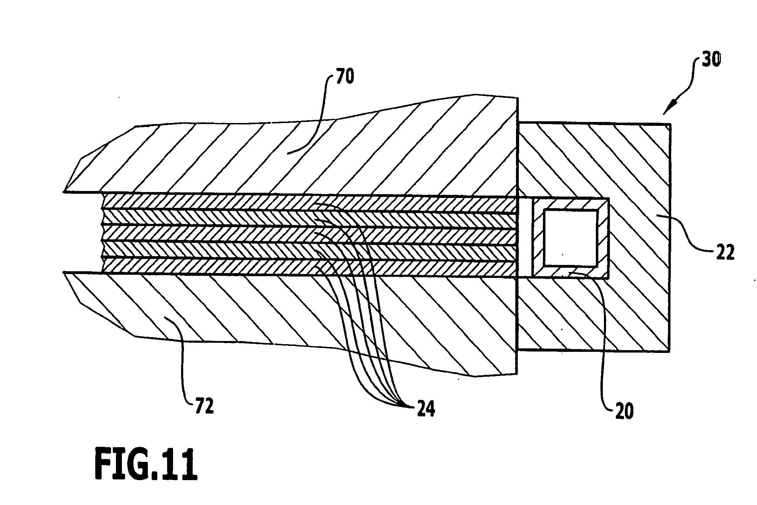

Die Figur 11 zeigt eine Ausführungsform einer nicht erfindungsgemäßen Einrichtung, mit welcher sich Randbereiche mehrerer aufeinander gestapelter Blechlagen 24 gleichzeitig erfindungsgemäß induktiv erwärmen lassen. Dabei werden die Blechlagen 24 zwischen Haltebacken 70 und 72 gehalten, so wie dies die Figur 11 zeigt, so dass sich gemäß Figur 11 rechte Randbereiche der Blechlagen 24 gleichzeitig mit einer nicht erfindungsgemäßen Induktionseinheit 30, bestehend aus einem Induktor 20 und einem Konzentrator 22, induktiv erwärmen lassen.

Damit man die nicht erfindungsgemäße Einrichtung nicht an die Gestalt der Randbereiche der Blechlagen 24 anpassen muss (in einer Draufsicht auf die aufeinander gestapelten Blechlagen), können die in Längsrichtung dieser Randbereiche der Blechlagen 24 aufeinanderfolgenden Abschnitte dieser Randbereiche mit Hilfe der Induktionseinheit 30 auch nacheinander induktiv erwärmt werden, indem man gemäss einer bevorzugten Ausführungsform des erfindungsgemässen Verfahrens die in Figur 11 dargestellte Induktionseinheit 30 den Randbereichen der aufeinandergestapelten Blechlagen 24 entlang bewegt und/oder die aufeinandergestapelten Blechlagen 24 mit ihren Randbereichen an der Induktionseinheit 30 vorbeibewegt.

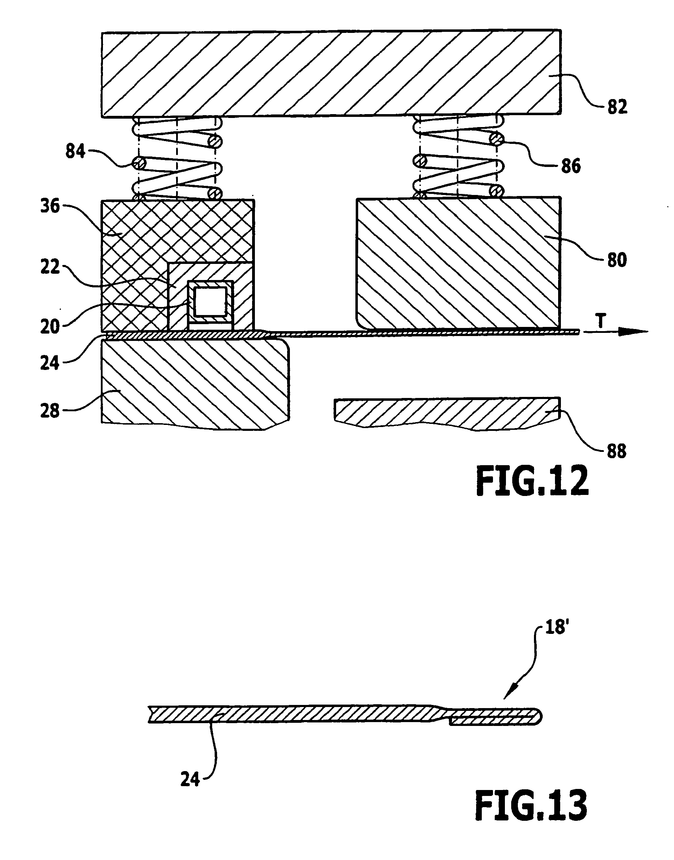

Anhand der Figuren 12 und 13 sollen eine weitere Ausführungsform des erfindungsgemäßen Verfahrens und eine zu dessen Durchführung geeignete erfindungsgemäße Einrichtung beschrieben werden, welche dazu vorgesehen sind, eine Federstahl-Blechlage während des Erwärmens ihres umzuformenden Bereichs unter eine in der Blechlage wirkende Zugspannung zu setzen, um dadurch Verwerfungen des induktiv zu erwärmenden Bereichs der Blechlage zu minimieren und gegebenenfalls die Dicke des Blechs zu reduzieren. Die in Figur 12 dargestellte Einrichtung hat ähnlich wie die Einrichtung gemäß Figur 5 einen Niederhalter 36, einen Konzentrator 22 und einen Induktor 20, unter denen sich eine Auflage 28 für eine Blechlage 24 befindet, so dass sich Letztere zwischen dem Niederhalter 36 und der Auflage 28 einspannen lässt. Hingegen ist der Konzentrator 22 so bemessen, dass, was die Figur 12 nicht erkennen lässt, der Niederhalter 36 nach unten etwas über den Konzentrator 22 vorspringt und infolgedessen auch bei eingespannter Blechlage 24 diese unter dem Konzentrator 22 und dem Induktor 20 frei von Einspannkräften ist.

Die in Figur 12 dargestellte Einrichtung hat ferner einen Stempel 80, der dazu dient, die Blechlage 24 gemäß Figur 12 rechts von der Auflage 28 nach unten zu drücken und dadurch etwas nach unten auszulenken, um in der Blechlage (außer Biegespannungen) auch Zugspannungen zu erzeugen, welche durch den Pfeil T angedeutet wurden. Dies gilt insbesondere für den Fall, dass die Blechlage 24 eine Öffnung aufweist, die gemäß Figur 12 rechts von dem in Figur 12 dargestellten Teil der Blechlage 24 liegt und um die herum ein kreisringförmiger Bereich der Blechlage induktiv erhitzt werden soll - der Niederhalter 36, der Konzentrator 22 und der Induktor 20 haben dann ebenso eine ringförmige Gestalt wie die Auflage 28 und der Stempel 80.

Über dem Niederhalter 36 und dem Stempel 80 befindet sich ein Joch 82 mit gegebenenfalls gleichfalls ringförmiger Gestalt; durch Absenken des Jochs 82 lassen sich mittels Druckfedern 84 und 86 Druckkräfte auf den Niederhalter 36 und den Stempel 80 ausüben. Gegebenenfalls kann unter dem Stempel 80 noch ein Anschlag 88 vorgesehen sein, um die vom Stempel 80 bewirkte Auslenkung der Blechlage 24 nach unten zu begrenzen.

Während des induktiven Erwärmens des unterhalb des Induktors 20 liegenden Bereichs der Blechlage 24 wird durch die vom Stempel 80 in der Blechlage 24 erzeugten Zugspannungen verhindert, dass Wärmedehnungen der Blechlage 24 zu Verwerfungen der Blechlage in dem induktiv erhitzten Bereich und gegebenenfalls daran unmittelbar angrenzenden Bereichen der Blechlage 24 auftreten. Außerdem kann das Verfahren so durchgeführt werden, dass, wie in Figur 12 angedeutet, in Folge der in der Blechlage erzeugten Zugspannungen die Blechdicke etwas reduziert wird.

In Figur 12 sind die Abmessungsverhältnisse der dort gezeigten Bereiche der Blechlage 24 übertrieben dargestellt, was sich aus Figur 13 ergibt, welche einen Schnitt durch einen Teil der Blechlage 24 zeigt, nachdem der gemäß Figur 12 rechte Randbereich der Blechlage 24 umgefalzt wurde, um einen Stopper 18' (siehe Figur 2) zu bilden. In Folge der vorstehend beschriebenen Verminderung der Blechdicke ist die Gesamtdicke des Stoppers 18' geringer als die doppelte Dicke der originären Blechlage 24.

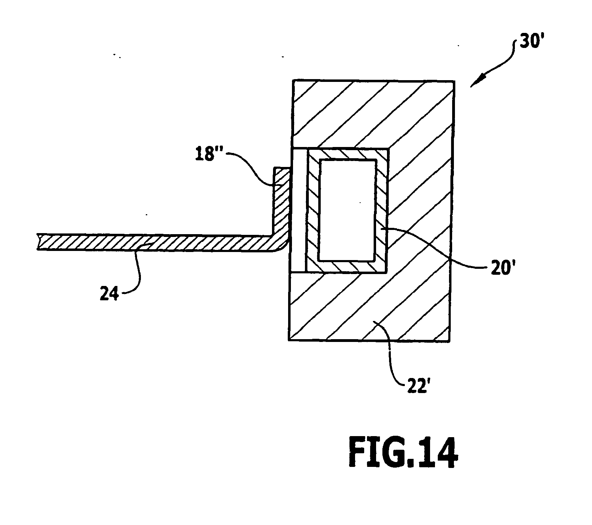

Bei der in Figur 14 dargestellten Ausführungsform ist eine Induktionseinheit 30' so gestaltet, dass sich mit ihr ein umzuformender Randbereich 18" einer Blechlage 24 nicht nur im Bereich des späteren Biegeradius induktiv erwärmen lässt, sondern gemäss einer bevorzugten Ausführungsform des erfindungsgemässen Verfahrens der gesamte Randbereich 18" samt seines Übergangs in die eigentliche Blechlage 24. Zu diesem Zweck weist der mit einem Konzentrator 22' kombinierte Induktor 20' der Induktionseinheit 30' eine Breite oder Höhe, das heißt gemäß Figur 14 eine vertikale Abmessung auf, die gleich oder etwas größer ist als die Breite (in Figur 14 die Höhe) des Randbereichs 18" der Blechlage 24. Eine solche Ausführungsform bringt den Vorteil mit sich, dass sich zur Bildung eines Stoppers (wie des Stoppers 18' gemäß Figur 2) oder eines anderen Abstützelements der Randbereich 18" nicht nur im Bereich seiner Wurzel leichter umbiegen lässt, sondern dass im Zuge des Umfaltens des Randbereichs 18" auf die Blechlage 24 am freien Rand (oder in dessen Nachbarschaft) des Randbereichs 18" im Blech keine Risse oder Falten entstehen, wenn, in einer Draufsicht auf die Blechlage 24, der Randbereich 18" nach dem Umfalten keinen geradlinigen Randbereich bildet, sondern zum Beispiel eine Öffnung der von der Blechlage gebildeten Lage der Flachdichtung kreisringförmig umgibt oder an einer anderen Stelle der Dichtungslage liegt, an welcher die Letztere (in einer Draufsicht) eine konvex gekrümmte Randkontur aufweist.

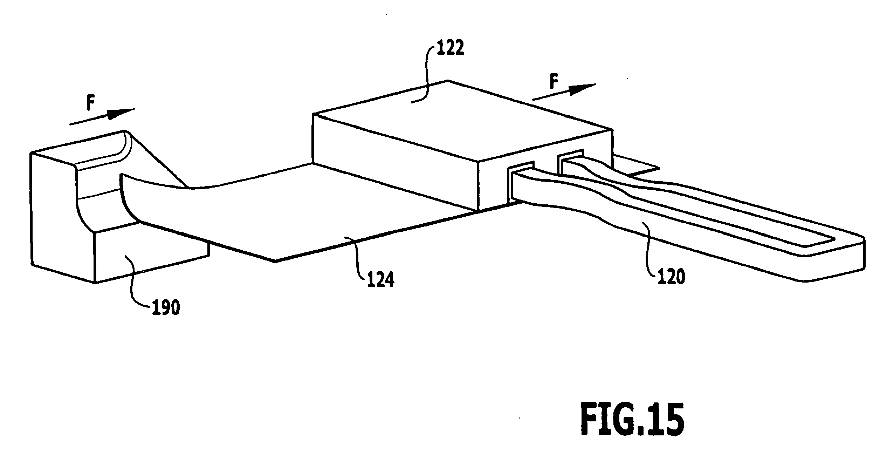

Schließlich ist in Figur 15 eine weitere Ausführungsform der nicht erfindungsgemäßen Einrichtung dargestellt, anhand welcher gezeigt werden soll, wie sich ein umzuformender Randbereich einer Blechlage erfindungsgemäß in einem kontinuierlichen Verfahren zum Zwecke des Umformens induktiv erwärmen und in unmittelbarem Anschluss umformen lässt, wobei in Figur 15 nur ein Beispiel für die Art des Umformens gezeigt wird, nämlich ein Umfalten des Randbereichs auf die eigentliche Blechlage.

Bei der in Figur 15 dargestellten Ausführungsform der nicht erfindungsgemäßen Einrichtung umfasst eine Induktionseinheit einen Induktor 120 und einen Konzentrator 122 für das Konzentrieren des durch den Induktor erzeugten elektromagnetischen Wechselfelds auf den zu erwärmenden und umzuformenden Bereich einer Blechlage 124, von der nur ein Teil, nämlich der zu erwärmende Bereich, und dieser nur zum Teil, dargestellt wurde.

Der Induktor 120 hat hier die Gestalt eines in die Form einer Schleife gebrachten elektrischen Leiters, wobei nur zwei Längsabschnitte der beiden Schenkel dieses elektrischen Leiters innerhalb des Konzentrators 122 verlaufen, so dass nur dort das elektromagnetische Wechselfeld auf die Blechlage 124 konzentriert wird - die außerhalb des Konzentrators 122 verlaufenden Abschnitte des Induktors 120 haben deshalb keine nennenswerte Erwärmung derjenigen Bereiche der Blechlage 124 zur Folge, welche unterhalb desjenigen Bereichs des Induktors 120 liegen (und nicht dargestellt wurden), welcher außerhalb des Konzentrators 122 verläuft. Nur der Vollständigkeit halber sei noch erwähnt, dass der den Induktor 120 durchfließende elektrische Wechselstrom in diejenigen Enden der beiden Schenkel des Induktors eingespeist wird, welche die Figur 15 nicht zeigt, da sie an dem gemäß Figur 15 linken Ende des Konzentrators 122 liegen und dort zugänglich sein sollen.

Bei der in Figur 15 dargestellten Einrichtung soll die den Induktor 120 und den Konzentrator 122 umfassende Induktionseinheit in Richtung des Pfeils F bewegt werden und dabei einen in Figur 15 gezeigten Randbereich der Blechlage 124 überstreichen und induktiv erwärmen. Zusammen mit dieser Induktionseinheit wird auch ein Werkzeug 190 in Richtung des Pfeils F bewegt, wobei das Werkzeug 190 unmittelbar an den Konzentrator 122 anschließen und mit der Induktionseinheit zu einer Baueinheit vereint sein kann. Wie die Figur 15 zeigt, ist das Werkzeug 190 so gestaltet, dass der durch die Induktionseinheit 120, 122 erwärmte Randbereich der Blechlage 124 fortlaufend aufgewölbt und sodann durch einen nicht dargestellten, entsprechend gestalteten Bereich des Werkzeugs 190 auf die eigentliche Blechlage 124 umgefaltet wird, so wie dies die Figur 2 für den Stopper 18' zeigt.

Wie sich aus dem Vorstehenden ergibt, zeichnen sich bevorzugte Ausführungsformen der Erfindung durch folgende Merkmale aus:
Bei einem erfindungsgemäßen Verfahren zur Herstellung einer Blechlage, welche in unmittelbarer Nachbarschaft des Abstützelements einen mit einer Verformung versehenen elastischen Blechlagenbereich aufweist, handelt es sich bei der Verformung um mindestens eine federelastische Abdichtsicke, für welche das Abstützelement einen Verformungsbegrenzer bildet.
Die Form der Induktionseinheit ist an die Form des umzuformenden Bereichs der Blechlage angepasst.
Die Induktionseinheit und die Blechlage sind so relativ zueinander bewegbar, dass sich mit der Induktionseinheit der umzuformende Bereich der Blechlage überfahren lässt.
Es sind Induktionseinheiten vorgesehen, die mit den Öffnungen ihrer Magnetfeld-Konzentrationsvorrichtungen einander gegenüberliegen, wobei die zu behandelnde Blechlage zwischen den Induktionseinheiten anordenbar ist.
Der Induktionseinheit ist eine Einspannvorrichtung zum Einspannen der Blechlage zumindest in der Nachbarschaft des induktiv zu erwärmenden Bereichs der Blechlage zugeordnet.
Es ist ein Abstandshalter aus einem für das elektromagnetische Wechselfeld durchlässigen Werkstoff vorgesehen, welcher zwischen dem induktiv zu erwärmenden Bereich der Blechlage und dem Induktor anordenbar ist.

## Patentansprüche

1. Verfahren zum bereichsweisen Umformen einer aus einem Federstahlblech hergestellten Blechlage einer Flachdichtung, die in mindestens einem umzuformenden Bereich mit einem durch Umformen der Blechlage erzeugten Abstützelement zu versehen ist, auf welches beim Einspannen der Flachdichtung zwischen Maschinenbauteil-Dichtflächen Pressungskräfte einwirken und in dessen Bereich die Blechlage eine größere Gesamtdicke aufweist als in an das Abstützelement angrenzenden Bereichen der Blechlage, wobei die Härte der Blechlage vor dem Umformen in dem umzuformenden Bereich durch induktive Erwärmung vermindert wird, **dadurch gekennzeichnet, dass**, um die Härte der Blechlage ausschließlich in dem umzuformenden Bereich zu vermindern,
(a) ein der induktiven Erwärmung dienendes elektromagnetisches Wechselfeld auf den umzuformenden Bereich konzentriert wird und
(b) die Einwirkzeit des elektromagnetischen Wechselfelds auf jeden Teil des umzuformenden Bereichs der Blechlage höchstens ungefähr 2 sec. beträgt,
und dass die Blechlage zur Vermeidung der Bildung von Verwerfungen beim Erwärmen ihres umzuformenden Bereichs während des Erwärmens zwischen Einspannflächen eingespannt ist und/oder unter einer Zugspannung steht.

2. Verfahren nach Anspruch 1, **dadurch gekennzeichnet, dass** alle Teile des umzuformenden Bereichs der Blechlage gleichzeitig und insbesondere gleich lang dem elektromagnetischen Wechselfeld ausgesetzt werden.

3. Verfahren nach Anspruch 1 oder 2, **dadurch gekennzeichnet, dass** als Ausgangsmaterial für die Blechlage ein Federstahl mit einer Streckgrenze Rₑ von mindestens 1000 N/mm² verwendet wird.

4. Verfahren nach einem der Ansprüche 1 bis 3, **dadurch gekennzeichnet, dass** als Ausgangsmaterial für die Blechlage ein austenitischer Federstahl verwendet wird.

5. Verfahren nach einem der Ansprüche 1 bis 4, **dadurch gekennzeichnet, dass** der umzuformende Bereich der Blechlage auf mindestens ungefähr 700° C erwärmt wird.

6. Verfahren nach Anspruch 5, **dadurch gekennzeichnet, dass** der umzuformende Bereich der Blechlage auf eine Temperatur von ungefähr 700° C bis ungefähr 900° C erwärmt wird.

7. Verfahren nach einem der Ansprüche 1 bis 6, **dadurch gekennzeichnet, dass** die Einwirkzeit des elektromagnetischen Wechselfelds mindestens einige Millisekunden beträgt.

8. Verfahren nach einem der Ansprüche 1 bis 7, **dadurch gekennzeichnet, dass** die Einwirkzeit des elektromagnetischen Wechselfeldes ungefähr 10 msec bis ungefähr 1 sec beträgt.

9. Verfahren nach einem der Ansprüche 1 bis 8, **dadurch gekennzeichnet, dass** die induktive Erwärmung des mit dem Abstützelement zu versehenden Bereichs der Blechlage nach Einwirkzeit, Konzentration und Energie des elektromagnetischen Wechselfeldes derart gewählt wird, dass in diesem Bereich zumindest keine nennenswerte Rekristallisation des Stahls eintritt.

10. Verfahren nach einem der Ansprüche 1 bis 9, **dadurch gekennzeichnet, dass** die Frequenz des elektromagnetischen Wechselfelds einige hundert kHz bis ungefähr 1 MHz beträgt.

11. Verfahren nach einem der Ansprüche 1 bis 10, **dadurch gekennzeichnet, dass** die Energie des elektrischen Wechselfeldes mindestens ungefähr 1 kW beträgt.

12. Verfahren nach einem der Ansprüche 1 bis 11, **dadurch gekennzeichnet, dass** der umzuformende Bereich der Blechlage nach seiner Erwärmung so schnell abgekühlt wird, dass eine die Umformbarkeit des Blechs beeinträchtigende Versprödung des Stahls unterbleibt.

13. Verfahren nach einem der Ansprüche 1 bis 12, **dadurch gekennzeichnet, dass** das auf den umzuformenden Bereich der Blechlage einwirkende elektromagnetische Wechselfeld mit mindestens einem an eine Wechselstromquelle angeschlossenen elektrischen Leiter als Induktor sowie einer diesen teilweise umschließenden Magnetfeld-Konzentrationsvorrichtung erzeugt wird, welch Letztere zusammen mit dem Induktor eine Induktionseinheit bildet und eine dem umzuformenden Bereich der Blechlage zugekehrte Öffnung aufweist, in deren Bereich die Magnetfeld-Konzentrationsvorrichtung für das elektromagnetische Wechselfeld durchlässig ist.

14. Verfahren nach einem der Ansprüche 1 bis 13 zur Herstellung einer Blechlage, welche in unmittelbarer Nachbarschaft des Abstützelements einen mit einer Verformung versehenen Blechlagenbereich aufweist, der ohne eine thermische Nachbehandlung federelastische Eigenschaften besitzt, **dadurch gekennzeichnet, dass** die induktive Erwärmung des mit dem Abstützelement zu versehenden Bereichs der Blechlage nach Einwirkzeit, Konzentration und Energie des elektromagnetischen Wechselfeldes derart gewählt wird, dass der Stahl in dem mit der Verformung zu versehenden bzw. versehenen Bereich der Blechlage zumindest keine nennenswerte Gefügeänderung erfährt.

## Claims

1. Method for forming areas of a sheet metal layer of a flat gasket made of a spring steel which is to be provided, in at least one area that is to be formed, with a supporting element produced by forming the sheet metal layer, said supporting element being acted upon by compressive forces when the flat gasket is clamped between machine component sealing faces, the sheet metal layer having a greater total thickness in the area of said supporting element than in areas of the sheet metal layer adjacent to the supporting element, wherein the hardness of the sheet metal layer in the area to be formed is reduced by inductive heating prior to the forming process, **characterized in that** in order to reduce the hardness of the sheet metal layer exclusively in the area that is to be formed,
(a) an alternating electromagnetic field serving to effect the inductive heating is concentrated on the area to be formed and
(b) the time of exposure to the alternating electromagnetic field used on every part of the sheet metal layer area that is to be formed is at most approximately 2 sec,
and **in that** during the heating process, the sheet metal layer is clamped between clamping surfaces and/or is subjected to tensile stress in order to prevent the development of warping when heating the area thereof that is to be formed.

2. Method in accordance with claim 1, **characterized in that** all parts of the area of the sheet metal layer that is to be formed are exposed to the alternating electromagnetic field simultaneously and in particular for the same length of time.

3. Method in accordance with claim 1 or 2, **characterized in that** a spring steel having a yield strength Rₑ of at least 1000 N/mm² is used as a starting material for the sheet metal layer.

4. Method in accordance with any one of claims 1 to 3, **characterized in that** an austenitic spring steel is used as a starting material for the sheet metal layer.

5. Method in accordance with any one of claims 1 to 4, **characterized in that** the area of the sheet metal layer that is to be formed is heated to at least approximately 700 °C.

6. Method in accordance with claim 5, **characterized in that** the area of the sheet metal layer that is to be formed is heated to a temperature of approximately 700 °C to approximately 900 °C.

7. Method in accordance with any one of claims 1 to 6, **characterized in that** the time of exposure to the alternating electromagnetic field is at least some milliseconds.

8. Method in accordance with any one of claims 1 to 7, **characterized in that** the time of exposure to the alternating electromagnetic field is approximately 10 msec to approximately 1 sec.

9. Method in accordance with any one of claims 1 to 8, **characterized in that** in terms of time of exposure to and concentration and energy of the alternating electromagnetic field, the inductive heating of the area of the sheet metal layer that is to be provided with the supporting element is selected such that there is at least no appreciable recrystallization of the steel in this area.

10. Method in accordance with any one of claims 1 to 9, **characterized in that** the frequency of the alternating electromagnetic field is several hundreds of kHz to approximately 1 MHz.

11. Method in accordance with any one of claims 1 to 10, **characterized in that** the energy of the alternating electromagnetic field is at least approximately 1 kW.

12. Method in accordance with any one of claims 1 to 11, **characterized in that**, after being heated up, the area of the sheet metal layer that is to be formed is cooled down at a rate sufficiently rapid for an embrittlement of the steel which affects the formability of the sheet metal not to take place.

13. Method in accordance with any one of claims 1 to 12, **characterized in that** the alternating electromagnetic field to which the area of the sheet metal layer that is to be formed is exposed is produced using at least one electrical conductor connected to an alternating current source as an inductor and a magnetic field concentrating device which partially encloses the inductor and, together with the inductor, forms an induction unit and has an opening that faces towards the area of the sheet metal layer that is to be formed, the magnetic field concentrating device being permeable to the alternating electromagnetic field in the area of said opening.

14. Method in accordance with any one of claims 1 to 13 for producing a sheet metal layer which comprises in the immediate vicinity of the supporting element a sheet metal layer area provided with a deformation, said sheet metal layer area having resiliently flexible properties without a thermal post-treatment, **characterized in that** in terms of time of exposure to and concentration and energy of the alternating electromagnetic field, the inductive heating of the area of the sheet metal layer that is to be provided with the supporting element is selected such that there is at least no appreciable structural transformation of the steel in the area of the sheet metal layer that is to be provided or is provided with the deformation.

## Revendications

1. Procédé pour le formage local d'une couche de tôle d'un joint plat fabriquée dans une tôle d'acier à ressorts, le joint plat étant à pourvoir d'un élément d'appui produit par formage de la couche de tôle dans au moins une zone à déformer, des efforts de compression s'appliquant sur ledit élément d'appui par serrage du joint plat entre des surfaces d'étanchéité de composants de machine, la couche de tôle présentant au niveau de l'élément d'appui une épaisseur totale supérieure à celle des zones de la couche de tôle limitrophes à l'élément d'appui, la dureté de la couche de tôle étant réduite avant formage par chauffage par induction dans la zone à déformer, **caractérisé en ce que**, pour diminuer la dureté de la couche de tôle exclusivement dans la zone à déformer,
(a) un champ alternatif électromagnétique servant au chauffage par induction est concentré sur la zone à déformer,
(b) **en ce que** le temps d'action du champ alternatif électromagnétique sur chaque partie de la zone à déformer de la couche de tôle s'élève au maximum à près de 2 sec,
et **en ce que** pour éviter un voilage par chauffage de sa zone à déformer, la couche de tôle est serrée entre des surfaces de serrage et/ou est serrée par traction pendant le chauffage.

2. Procédé selon la revendication 1, **caractérisé en ce que** toutes les parties de la zone à déformer de la couche de tôle sont exposées au champ alternatif électromagnétique simultanément, et en particulier pendant la même durée.

3. Procédé selon la revendication 1 ou la revendication 2, **caractérisé en ce qu'**un acier à ressorts ayant une limite d'élasticité Rₑ de 1000 N/mm² au moins est utilisé comme matériau initial pour la couche de tôle.

4. Procédé selon l'une des revendications 1 à 3, **caractérisé en ce qu'**un acier à ressorts austénitique est utilisé comme matériau initial pour la couche de tôle.

5. Procédé selon l'une des revendications 1 à 4, **caractérisé en ce que** la zone à déformer de la couche de tôle est chauffée à près de 700 °C au moins.

6. Procédé selon la revendication 5, **caractérisé en ce que** la zone à déformer de la couche de tôle est chauffée à une température comprise entre près de 700 °C et près de 900 °C.

7. Procédé selon l'une des revendications 1 à 6, **caractérisé en ce que** le temps d'action du champ alternatif électromagnétique est de quelques millisecondes au moins.

8. Procédé selon l'une des revendications 1 à 7, **caractérisé en ce que** le temps d'action du champ alternatif électromagnétique est compris entre près de 10 msec et près de 1 sec.

9. Procédé selon l'une des revendications 1 à 8, **caractérisé en ce que** le chauffage par induction de la zone de la couche de tôle à pourvoir de l'élément d'appui est sélectionné en fonction du temps d'action, de la concentration et de l'énergie du champ alternatif électromagnétique, de manière à empêcher au moins une recristallisation notable de l'acier dans cette zone.

10. Procédé selon l'une des revendications 1 à 9, **caractérisé en ce que** la fréquence du champ alternatif électromagnétique est comprise entre quelques centaines de kHz à près de 1 MHz.

11. Procédé selon l'une des revendications 1 à 10, **caractérisé en ce que** l'énergie du champ alternatif électromagnétique est de près de 1 kW au moins.

12. Procédé selon l'une des revendications 1 à 11, **caractérisé en ce que** la zone à déformer de la couche de tôle est refroidie après son chauffage avec une rapidité évitant une fragilisation de l'acier qui ait un impact négatif sur le formage de la tôle.

13. Procédé selon l'une des revendications 1 à 12, **caractérisé en ce que** le champ alternatif électromagnétique agissant sur la zone à déformer de la couche de tôle est généré avec au moins un conducteur électrique pouvant être connecté à une source de courant alternatif en tant qu'inducteur et avec un dispositif concentrateur de champ magnétique entourant partiellement l'inducteur, lequel forme une unité d'induction avec l'inducteur et présente une ouverture dirigée vers la zone à déformer de la couche de tôle, au niveau de laquelle le dispositif concentrateur de champ magnétique est perméable au champ alternatif électromagnétique.

14. Procédé selon l'une des revendications 1 à 13 pour la fabrication d'une couche de tôle présentant une zone de couche de tôle pourvue d'un formage directement contiguë à l'élément d'appui, laquelle est dotée de propriétés d'élasticité sans traitement consécutif thermique, **caractérisé en ce que** le chauffage par induction de la zone de la couche de tôle à pourvoir de l'élément d'appui est sélectionné en fonction du temps d'action, de la concentration et de l'énergie du champ alternatif électromagnétique, de manière à empêcher au moins une variation notable de la structure de l'acier dans la zone de la couche de tôle à pourvoir ou pourvue de la déformation.
